# EUROPÄISCHE PATENTANMELDUNG

(11) **EP 4 390 198 A1**
(43) Veröffentlichungstag der Anmeldung: **26.06.2024**
(21) Anmeldenummer: 22214703.5
(22) Anmeldetag: 19.12.2022
(51) Int. Cl.: F16K 31/122, F16K 31/124, F16K 31/42, F16K 37/00, F16K 1/54, F15B 21/08

(54) **VORRICHTUNG UND VERFAHREN ZUR DURCHFLUSSREGELUNG EINES FLUIDS**

(71) Anmelder: Asco Numatics GmbH, 75248 Ölbronn-Dürrn (DE)
(72) Erfinder: Steinle, Harald, 75443 Ötisheim (DE); Paulig, Martin, 75248 Ölbronn (DE)
(74) Vertreter: Witte, Weller & Partner Patentanwälte mbB

(57) **Zusammenfassung**

Eine Vorrichtung (10, 110) zur Durchflussregelung eines Fluids weist ein fluidisch steuerbares Regelventil (12, 112), eine Steuereinrichtung (14) mit zumindest einem Pilotventil (72, 74) zur Steuerung des Regelventils (12, 112) und einer Pilotsteuereinheit (38) zur Steuerung des zumindest einen Pilotventils (72, 74), einen Wegsensor (48) und einen Drucksensor (50) auf. Das Regelventil (12, 112) weist ein Schließelement (20) und eine sich daran anschließende Stange (24) auf, die entlang ihrer Längserstreckung in einer Führung (62) verschieblich gelagert ist. Die Stange (24) ist mit einem Vorspannelement (28) gekoppelt, das über die Stange (24) auf das Schließelement (20) einwirkt. Die Stange (24) erstreckt sich zumindest abschnittsweise durch einen Pilotraum (32), der fluidisch mit dem zumindest einen Pilotventil (72, 74) koppelbar ist, um gegen eine vom Vorspannelement (28) aufgebrachte Vorspannkraft ein unter Druck stehendes Pilotfluid in den Pilotraum (32) einzuleiten oder um das Pilotfluid aus dem Pilotraum (32) abzuleiten. Der Wegsensor (48) dient zur Erfassung eines Ventilzustands des Regelventils (12, 112) und zur Bereitstellung eines Wegsignals (54). Der Drucksensor (50) dient zur Erfassung eines aktuellen Drucks im Pilotraum (32) und zur Bereitstellung eines Drucksignals (56). Die Pilotsteuereinheit (38) ist dazu ausgebildet, das Wegsignal (54) und das Drucksignal (56) auszuwerten, um das zumindest eine Pilotventil (72, 74) anzusteuern. Ein Verfahren nutzt eine solche Vorrichtung (10, 110).

## Beschreibung

Die vorliegende Offenbarung bezieht sich auf eine Vorrichtung und ein Verfahren zur Durchflussregelung eines Fluids. Insbesondere bezieht sich die vorliegende Offenbarung auf Vorrichtungen zur Durchflussregelung mit zumindest einem Regelventil, das über eine Pilotsteuereinheit gesteuert wird. Solche Vorrichtungen können auch als Ventile mit Vorsteuereinheit bezeichnet werden.

Aus der JP H09-42211 A ist eine solche Ventilanordnung bekannt, die ein federbelastetes Hauptventil umfasst, das über zwei Pilotventile steuerbar ist, wobei ein erstes Pilotventil dazu ausgebildet ist, einen Druck in einem Pilotraum des Hauptventils zu erhöhen, und wobei ein zweites Pilotventil dazu ausgebildet ist, den Druck im Pilotraum zu reduzieren. Die Pilotventile sind mittels Pulsweitenmodulation (PWM) steuerbar. Im Pilotraum ist ein als Abstandssensor gestalteter Wegsensor vorgesehen, der die Position des Hauptventils erfasst. Auf Basis der vom Wegsensor bereitgestellten Signale werden die beiden Pilotventile angesteuert, um das Hauptventil zu betätigen.

In beispielhaften Ausgestaltungen bezieht sich die vorliegende Offenbarung auf Vorrichtungen zur Regelung von Fluiden, die als Sitzventil oder Schrägsitzventil gestaltete Regelventile aufweisen. Bei den Fluiden kann es sich beispielhaft um aggressive Flüssigkeiten, Öl, Dampf, Gas, Sauerstoff, Vakuum und/oder überhitztes Wasser handeln. Es kann sich grundsätzlich auch um Fluide aus der Lebensmitteltechnologie handeln. Die Vorsteuerung erfolgt üblicherweise mit einem anderen Medium, beispielsweise mit Luft (pneumatische Vorsteuerung) oder Wasser (hydraulische Vorsteuerung).

Sitzventile, insbesondere Schrägsitzventile, erlauben hohe Durchflussraten und nichtsdestotrotz eine schnelle Regelung, etwa zur Verhinderung von Druckspitzen und/oder zur schnellen Unterbrechung des Durchflusses. In beispielhaften Ausgestaltungen ist eine proportionale Regelung vorgesehen. Auf diese Weise kann insgesamt eine genaue und präzise Regelung des durchströmenden Fluids gewährleistet werden.

Beispielsweise weisen derartige Regelventile einen in einem zylindrischen Gehäuse gelagerten Kolben auf, der durch eine Feder vorgespannt und mit dem Schließelement des Regelventils gekoppelt ist. Über eine Vorsteuerung kann ein unter Druck stehendes Pilotfluid in einem Pilotraum eingeleitet werden, der beispielsweise auf einer der Feder abgewandten Seite des Kolbens angeordnet ist. Wenn die Kraft der Feder überwunden wurde, kann das Ventil (je nach Ventiltyp) geöffnet oder geschlossen werden. Dieses Wirkprinzip ist sowohl für NC-Ventile (normally closed) als auch für NO-Ventile (normally open) nutzbar.

Ventile für industrielle Anwendungen sind häufig hochbeansprucht, wobei gleichzeitig eine lange Lebensdauer gefordert ist. Dies führt häufig dazu, dass eine Vielzahl von Lastwechseln (Zyklusanzahl) gegeben ist. Gleichwohl ist ein möglichst schnelles Öffnen und Schließen bzw. eine schnelle Einstellung eines gewünschten Öffnungsgrades gewünscht.

Die Hinzufügung einer Vorsteuerung (Pilotsteuereinheit) ist für zumindest einige dieser Ziele dienlich. Bei der Vorsteuerung müssen die Spezifika des Ventilprinzips berücksichtigt werden. Beispielsweise weist eine übliche Kennlinie eines Regelventils mit federbelastetem Kolben zur Steuerung eines als Sitzventil gestalteten Regelventils häufig eine Hysterese auf, das Betriebsverhalten beim Öffnen und beim Schließen ist folglich nicht deckungsgleich.

Der aus der oben genannten JP H09-42211 A bekannte Abstandssensor eine Rückmeldung hinsichtlich des aktuellen Öffnungsgrades. Für die Regelung ist üblicherweise eine Kennlinie oder Kennwerte-Tabelle hinterlegt, so dass beispielsweise zur Erzielung eines bestimmten Durchflusses ein bestimmter Öffnungsgrad angefahren wird. Dies kann durch Einleitung eines unter Druck stehenden Pilotfluids in den Pilotraum des Regelventils entgegen der durch die Feder aufgebrachte Kraft bewerkstelligt werden, um das Regelventil zu öffnen. Es kann jedoch eine Serienstreuung und/oder eine Änderung des Betriebsverhaltens über die Lebensdauer auftreten, so dass die Regelung nicht die gewünschte Genauigkeit und Geschwindigkeit erreicht.

Vor diesem Hintergrund liegt der vorliegenden Offenbarung die Aufgabe zugrunde, eine Vorrichtung zur Durchflussregelung eines Fluids sowie ein entsprechendes Verfahren anzugeben, die eine schnelle und präzise Steuerung des Regelventils erlauben und möglichst die Anzahl erforderlicher Zyklen bei der Vorsteuerung reduziert. Dies soll möglichst zu einer Erhöhung der Lebensdauer der gesamten Vorrichtung beitragen. Ferner sollen der Energiebedarf und/oder der Medienbedarf für die Steuerung der Vorrichtung reduziert werden. Ferner soll möglichst eine hohe Regelgüte gewährleistet werden. Die Vorrichtung soll möglichst ohne aufwändige strukturelle/bauliche Eingriffe in die Grundstruktur des Regelventils implementierbar sein. Die Vorrichtung und das Verfahren sollen möglichst auch langfristig und bei fortgeschrittener Lebensdauer einen stabilen und genauen Betrieb des Regelventils ermöglichen.

Gemäß einem ersten Aspekt bezieht sich die vorliegende Offenbarung auf eine Vorrichtung zur Durchflussregelung eines Fluids, die Folgendes aufweist:
- ein insbesondere als Sitzventil gestaltetes Regelventil, das fluidisch steuerbar ist,
   wobei das Regelventil ein Schließelement und eine sich an das Schließelement anschließende Stange aufweist, die entlang ihrer Längserstreckung in einer Führung verschieblich gelagert ist, und
   wobei die Stange mit einem Vorspannelement gekoppelt ist, das über die Stange auf das Schließelement einwirkt,

- eine Steuereinrichtung mit zumindest einem Pilotventil zur Steuerung des Regelventils und einer Pilotsteuereinheit zur Steuerung des zumindest einen Pilotventils,
   wobei sich die Stange zumindest abschnittsweise durch einen Pilotraum erstreckt, der fluidisch mit dem zumindest einen Pilotventil koppelbar ist, um gegen eine vom Vorspannelement aufgebrachte Vorspannkraft ein unter Druck stehendes Pilotfluid in den Pilotraum einzuleiten oder um das Pilotfluid aus dem Pilotraum abzuleiten,
- einen Wegsensor zur Erfassung eines Ventilzustands des Regelventils, insbesondere einer Ventilposition, und zur Bereitstellung eines Wegsignals, und
- einen Drucksensor zur Erfassung eines aktuellen Drucks im Pilotraum und zur Bereitstellung eines Drucksignals,
   wobei die Pilotsteuereinheit dazu ausgebildet ist, das Wegsignal und das Drucksignal auszuwerten, um das zumindest eine Pilotventil anzusteuern.

Auf diese Weise wird also die aktuelle Stellung des Regelventils nicht nur über einen Wegsensor, der grundsätzlich ein zumindest zeitweise zum Druck im Pilotraum proportionales Signal liefert, sondern zusätzlich auch über einen Drucksensor überwacht. Auf diese Weise kann das Regelventil noch präziser gesteuert werden. Dies ist beispielsweise dann von Vorteil, wenn sich das Regelventil gerade noch in seiner Ruhelage (beispielsweise geschlossene Position bei NC-Konfiguration sowie geöffnete Position bei NO-Konfiguration) befindet. Dann ist nämlich der Teller/Kolben des Regelventils noch nicht ausgelenkt. Rein über die Erfassung der Position mit dem Wegsensor kann beispielsweise ein Zustand unmittelbar vor der Bewegung nicht hochgenau überwacht werden. Wenn sich das Schließelement und die Stange des Ventils nicht bewegen, kann der Wegsensor folglich keine Auslenkung feststellen. Mit dem Drucksensor kann jedoch überwacht werden, ob sich der Druck einem Bereich nähert, in dem es üblicherweise zu einer Auslenkung kommt. Dies gilt beispielsweise für einen Druckbereich im Pilotraum, der üblicherweise einen Übergang zwischen Haftreibung und Gleitreibung abdeckt.

Mit dem Wegsensor und dem zusätzlichen Drucksensor liegen zwei Signalquellen zur direkten oder indirekten Erfassung eines Ist-Drucks im Pilotraum vor. Auf diese Weise kann genauer auf die aktuelle Stellung (Öffnungsgrad) des Regelventils geschlossen werden.

Ferner kann mit der Erfassung sowohl eines Wegsignals als auch eines Drucksignals zu Überwachung des Pilotraums auch eine etwaige konstruktionsbedingte Hysterese (beispielsweise unterschiedliche Kennlinie beim Öffnen und Schließen) besser erfasst und gegebenenfalls kompensiert werden.

Hinsichtlich der Lebensdauer kann es von Interesse sein, zwei unterschiedliche Signale (Wegsignal und Drucksignal) zur Überwachung des Pilotraums zu nutzen, weil auf diese Weise ein möglicher Drift im Zeitablauf festgestellt werden kann. Wenn sich eine Korrelation zwischen dem Wegsignal und dem Drucksignal im Zeitablauf verändert, kann dies auf einen erhöhten Verschleiß oder anderweitig veränderte Betriebsbedingungen hindeuten. Eine solche langfristige Überwachung kann beispielsweise zur Anpassung von der Regelung zugrundeliegenden Kennlinien oder Parametersätzen genutzt werden, wenn die Vorrichtung als solches noch betriebsfähig ist. Sofern der erfasste Drift nicht mehr tolerierbar ist, kann auf diese Weise auch frühzeitig ein Signal für eine Reparatur oder einen Austausch gegeben werden. Die Reparatur bzw. der Austausch können sich zum einen auf das Regelventil beziehen. Grundsätzlich können Reparatur und/oder Austausch auch die Steuereinrichtung zur Vorsteuerung betreffen.

Die Erfassung des aktuellen Drucks im Pilotraum erlaubt eine präzisere und schnellere Regelung. Beispielsweise wird ein Überschießen (Überschwingen) vermieden oder reduziert. Dies kann etwa beim Übergang zwischen Haftreibung und Gleitreibung der Fall sein, wenn Stick-Slip-Effekte auftreten.

Das Regelventil ist beispielsweise als Sitzventil, insbesondere als Schrägsitzventil, gestaltet. Beispielhaft handelt es sich bei dem Regelventil um ein fremdbetätigtes federbelastetes Kolbenventil in Schrägsitzbauweise. Ein Schrägsitzventil koppelt üblicherweise unter einem (von 90° abweichenden) Winkel an eine Fluidleitung an, um dort dem Fluidfluss bedarfsweise zu unterbrechen, freizugeben oder zu variieren. Das Regelventil wirkt hierzu mit einem Schließelement auf einen Ventilsitz ein, der in der Fluidleitung ausgebildet ist.

Der Kolben des Ventils kann auch als Teller bezeichnet werden. Zum einen wirkt ein Vorspannelement auf den Teller, das sich an einem Ventilgehäuse abstützt und das Schließelement in einen Normalzustand (geöffnet bei NO-Typ und geschlossen bei NC-Typ) drängt. Über einen Pilotraum kann ferner mit einem Pilotfluid auf den Teller eingewirkt werden, um die Kraft des Vorspannelements (Feder oder dergleichen) zu überwinden.

Beispielsweise steht das Pilotfluid (Druckluft, Wasser, Hydraulikfluid oder dergleichen) mit einem Druck von etwa 6 bar zur Verfügung. Die Steuereinrichtung sorgt dafür, dass das Fluid in den Pilotraum einströmen kann, um dort den Druck zu erhöhen. Beispielsweise beginnt die Bewegung des Regelventils aus dem Normalzustand bei einem Druck von etwa 2 bar im Pilotraum, wobei das Regelventil dann etwa bei einem Druck von 3 bar vollständig geöffnet ist. Ein Zwischenzustand (Regelventil teilweise geöffnet) kann angefahren werden, wenn der Druck im Pilotraum auf einen entsprechenden Zwischenwert eingeregelt wird. Die Bewegung des Regelventils kann mit dem Wegsensor erfasst werden. Grundsätzlich lässt sich über die Federkennlinie dann auch auf einen Druck im Pilotraum schließen. Gleichwohl erlaubt die direkte Erfassung des Drucks mit einem Drucksensor eine präzisere Steuerung.

Es sind verschiedene Arten von Drucksensoren bekannt, die üblicherweise auf der Verformung von Sensorelementen beruhen. Grundsätzlich können verschiedene physikalische Effekte genutzt werden. Beispielsweise gibt es hierzu piezoelektrische Drucksensoren, piezoresistive Drucksensoren, Drucksensoren mit Dehnungsmessstreifen, kapazitive Drucksensoren, induktive Drucksensoren und ähnliches.

Das Regelventil ist insbesondere als Sitzventil gestaltet. Ein Sitzventil ist ein Ventil, bei dem die Anschlüsse durch Aufsetzen oder Abheben eines abdichtenden Elements verbunden oder getrennt werden. Dies kann in der geschlossenen Stellung eine hermetische Abdichtung bewirken. Das Schließelement ist beispielsweise ein Teller mit einer umlaufenden Dichtung. Bedarfsweise ist eine Regelkontur (Regelkonus) vorgesehen, um eine günstige Korrelation zwischen Öffnungsgrad und Stellung des Schließelement herbeizuführen.

Eine offenbarungsgemäße Vorrichtung ermöglicht idealerweise ein verbessertes Regelverhalten. Vorzugsweise lässt sich zumindest die Lebensdauer der Steuereinrichtung, insbesondere des zumindest einen Pilotventils, erhöhen, weil weniger Schaltspiele erforderlich sind, um einen gewünschten Öffnungsgrad (Sollwertänderung) beim Regelventil zu erreichen. Wenn weniger Schaltspiele erforderlich sind, lässt sich der gewünschte Öffnungsgrad auch in kürzerer Zeit einregeln. Entsprechend können sich der Energieverbrauch und der Medienverbrauch reduzieren. Ferner reduziert sich die Vibrationsbelastung durch die reduzierte Anzahl an Schaltspielen des zumindest einen Pilotventils und/oder des Regelventils.

Das Regelventil umfasst üblicherweise ein Ventilgehäuse, das auch den Teller (Kolben) des Ventils und den Pilotraum umschließt. Mit dem Ventilgehäuse kann das Regelventil beispielhaft an eine Fluidleitung angeflanscht werden.

Das zumindest eine Pilotventil ist beispielsweise als 2/2-Wegeventil gestaltet. In einer beispielhaften Ausgestaltung wird das zumindest eine Pilotventil mittels Pulsweitenmodulation (PWM) gesteuert. Auf diese Weise lässt sich bei einer gegebenen Frequenz der Tastgrad eines Erregersignals für das Pilotventil modulieren. Üblicherweise steht über das zumindest eine Pilotventil ein Pilotfluid mit relativ konstantem Druck zur Verfügung, so dass das Pilotventil in erster Linie eine Fluidmenge bereitstellt, die jedoch im Pilotraum zu einem einstellbaren Druck führt. Beispielsweise öffnet das Regelventil bei 2 bar, etwa 3 bar entsprechen dann 100 % Öffnung. Dies ist nicht einschränkend zu verstehen.

Gemäß einer beispielhaften Ausgestaltung ist die Pilotsteuereinheit dazu ausgebildet, zumindest bei einem Betriebszustand des Regelventils nahe dem Losbrechdruck sowohl das Wegsignal als auch das Drucksignal auszuwerten und der Steuerung des zumindest einen Pilotventils zugrunde zu legen.

Im Rahmen der vorliegenden Offenbarung wird unter dem Losbrechdruck derjenige Druck verstanden, der erforderlich ist, um die Haftreibung des Tellers des Regelventils (sowie die durch das Vorspannelement aufgebrachte Vorspannkraft) zu überwinden. Der Losbrechdruck entspricht also einer Losbrechkraft, die der Vorspannkraft entgegengerichtet ist. Beim Übergang zwischen Haftreibung und Gleitreibung hilft das mit dem Drucksensor zusätzlich gewonnene Drucksignal bei der Steuerung. Beispielsweise kann bei einem gerade noch nicht bewegten Ventilteller (kein Wegsignal über den Wegsensor), wenn der Druck im Pilotraum knapp unterhalb des Losbrechdrucks liegt, auf Basis des Drucksignals eine erforderliche Menge des Pilotfluids ermittelt werden, die bei gegebenem Pilotdruck zusätzlich in dem Pilotraum einzuleiten ist, um den Teller (Kolben) des Ventils zu bewegen. Damit kann ein Überschießen bzw. Überschwingen reduziert oder sogar verhindert werden.

Gemäß einer weiteren beispielhaften Ausgestaltung ist das Regelventil als Stetigventil gestaltet. Auf diese Weise kann beispielsweise der Öffnungsgrad des Regelventils stufenlos oder fein abgestuft zwischen 0 % und 100 % eingestellt werden. Das Regelventil ist beispielhaft als Proportionalventil gestaltet. Gemäß dieser Ausgestaltung wird das Regelventil also nicht getaktet, um einen gewünschten Fluidstrom/Öffnungsgrad einzustellen. Stattdessen wird gezielt eine durch das Ventil freizugeben Öffnung zwischen dem Ventilsitz und dem Schließelement eingestellt.

Gemäß einer weiteren beispielhaften Ausgestaltung weist das Regelventil beim Schließelement einen Regelkonus zur Einstellung des Öffnungsgrades auf. Auf diese Weise kann die Kennlinie des Regelventils (beispielsweise Öffnungsgrad über Ist-Position des Schließelements) günstig beeinflusst werden.

Gemäß einer weiteren beispielhaften Ausgestaltung ist das Regelventil als Schrägsitzventil gestaltet. Eine Neigung des Regelventils (beispielsweise mit Bezug auf eine Längsachse der Stange) gegenüber dem Fluidpfad beträgt beispielsweise etwa 30-60°.

Gemäß einer weiteren beispielhaften Ausgestaltung ist das Vorspannelement eine Feder, insbesondere eine Druckfeder, wobei sich das Vorspannelement zwischen einem Ventilgehäuse und einem mit der Stange gekoppelten Teller erstreckt. Es versteht sich, dass das Vorspannelement auch ein Paket aus zwei oder mehr Federn umfassen kann. Üblicherweise handelt es sich um Druckfedern. Zugfedern sind jedoch nicht ausgeschlossen. In einer beispielhaften Ausgestaltung erstreckt sich die Stange des Ventils durch das Vorspannelement hindurch. In einer beispielhaften Ausgestaltung ist das als Feder gestaltete Vorspannelement konzentrisch zur Stange des Ventils orientiert.

Bei einem normalerweise geschlossenen (NC) Regelventil drängt das Vorspannelement das Schließelement auf die geschlossene Stellung. Bei einem normalerweise geöffneten (NO) Regelventil drängt das Vorspannelement das Schließelement auf die geöffnete Stellung. Ein (positiver) Druck im Pilotraum wirkt üblicherweise gegen eine vom Vorspannelement auf den Teller aufgebrachte Vorspannkraft, um den Teller und damit das Schließelement zu bewegen. Die Bewegung des Tellers, des Schließelement und damit auch der Stange kann durch den Wegsensor zur Erfassung des Wegsignals genutzt werden.

Gemäß einer weiteren beispielhaften Ausgestaltung ist das Vorspannelement eine Feder, insbesondere eine Druckfeder, die sich gehäuseseitig abstützt und einen mit der Stange gekoppelten Teller in Richtung auf den Ventilsitz drängt. Es handelt sich dann um ein NC-Ventil. Beispielhaft stützt sich die Feder mittelbar oder unmittelbar am Ventilgehäuse ab. Beispielhaft erstreckt sich die Feder zwischen dem Ventilgehäuse und dem Teller.

Gemäß einer weiteren beispielhaften Ausgestaltung ist das Vorspannelement eine Feder, insbesondere eine Druckfeder, die sich gehäuseseitig abstützt und einen mit der Stange gekoppelten Teller weg vom Ventilsitz drängt. Es handelt sich dann um ein NO-Ventil.

Gemäß einer weiteren beispielhaften Ausgestaltung ist das zumindest eine Pilotventil ein pulsweitengesteuertes Ventil. Beispielhaft wird das Pilotventil mit einer Schaltfrequenz angesteuert, wobei dann innerhalb einer Periode die Einschaltdauer (0 % bis 100 %) wählbar ist. Die gewählte Einschaltdauer wird auch als Tastgrad bezeichnet. Es versteht sich, dass im Rahmen der Pulsweitenmodulation auch 100 % Einschaltdauer (100 % ED) möglich ist, also ein durchgehend geöffnetes Pilotventil. Bei einer Einschaltdauer von 0 % ist das Pilotventil durchgehend geschlossen.

Gemäß einer weiteren beispielhaften Ausgestaltung weist die Steuereinrichtung ein erstes Pilotventil zur Erhöhung des Drucks im Pilotraum und ein zweites Pilotventil zur Senkung des Drucks im Pilotraum auf. Auf diese Weise kann sowohl das Öffnen als auch das Schließen des Regelventils zuverlässig und präzise gesteuert werden. Im Falle eines Überschwingens oder Überschießens kann schnell reagiert werden.

Gemäß einer weiteren beispielhaften Ausgestaltung ist die Steuereinrichtung dazu ausgebildet, auf Basis des Wegsignals einen Wert für einen Ist-Öffnungsgrad des Regelventils und hierauf aufbauend einen kennlinienbasierten Druckwert für den Pilotraum zu ermitteln, wobei die Steuereinrichtung ferner dazu ausgebildet ist, auf Basis des Drucksignals einen Ist-Druck im Pilotraum zu ermitteln.

Ein kennlinienbasierter Druckwert für den Pilotraum ist zum Beispiel dann nur bedingt aussagekräftig, wenn das Regelventil noch in seinem Normalzustand ist, also noch keine Auslenkung stattgefunden hat. Weitere Effekte können dazu beitragen, dass Abweichungen zwischen dem Ist-Druck im Pilotraum und dem kennlinienbasierten Druckwert für den Pilotraum auf Basis des Wegsignals ermittelt werden. Dies kann beispielsweise durch eine Hysterese des Vorspannelements bedingt sein. Auch Stick-Slip-Effekte bei der Überwindung der Haftreibung können ursächlich sein.

Gemäß einer weiteren beispielhaften Ausgestaltung ist die Steuereinrichtung dazu ausgebildet, auf Basis des Wegsignals und des Drucksignals Änderungen des Betriebsverhaltens des Regelventils zu erfassen, insbesondere eine sich verändernde Korrelation zwischen dem Wegsignal und dem Drucksignal.

Wenn also das Signal für den Ist-Druck nicht mehr zur Kennlinie des Ventils passt und/oder wenn es im Zeitverlauf über die Lebensdauer des Ventils Veränderung (Drift) gibt, kann dies frühzeitig erkannt werden. Solche und weitere Änderungen des Betriebsverhaltens können beispielhaft zu Zwecken der prädiktiven Wartung (predictive maintenance) genutzt werden. Beispielhaft lassen sich auf diese Weise drohende Ausfälle und/oder ein Wartungsbedarf vorhersagen, wenn sich die Korrelation zwischen dem Wegsignal und dem Drucksignal verändert.

Im Falle einer signifikanten Abweichung kann die Steuereinrichtung ein Signal ausgeben, beispielsweise zur Anforderung einer Wartung oder eines Austauschs. Nötigenfalls kann ein Stopp-Signal ausgegeben werden, um den laufenden Betrieb der Vorrichtung zu unterbrechen. Es ist auch vorstellbar, eine in der Steuereinrichtung hinterlegte Kennlinie für das Betriebsverhalten anzupassen, sofern zwar ein Drift festgestellt wird, die erfassten Abweichungen zwischen dem Wegsignal und dem Drucksignal jedoch noch keine Wartung und/oder einen Austausch erforderlich machen. Auf diese Weise kann das gewünschte Betriebsverhalten der Vorrichtung auch bei fortgeschrittener Betriebsdauer aufrechterhalten werden.

Gemäß einer weiteren beispielhaften Ausgestaltung ist der Wegsensor als lineares Potentiometer gestaltet. Auf diese Weise kann eine Bewegung des Schließelements, des Tellers und der Stange des Ventils direkt erfasst und in ein Wegsignal überführt werden. Eine mediengetrennte Gestaltung (getrennt sowohl vom durch das Regelventil geregelten Fluid als auch vom Pilotfluid) des Wegsensors ist vorstellbar.

Gemäß einer weiteren beispielhaften Ausgestaltung der Vorrichtung ist die Stange des Regelventils gehäuseseitig über eine Schiebeführung gelagert. Beispielhaft ist der Wegsensor an einem vom Schließelement abgewandten Ende der Stange an die Stange des Regelventils angekoppelt. Die Schiebeführung soll einerseits für die erforderliche Abdichtung sorgen. Ferner soll jedoch die freie Bewegung der Stange möglichst wenig beeinträchtigt werden. Der als Kolben dienende Teller des Ventils sitzt üblicherweise in einem Zylinder, der auch den Pilotraum bildet. Auch dort ist einerseits eine möglichst leichtgängige Führung (geringe Haftreibung) und andererseits eine gute Abdichtung (Leckagevermeidung) gewünscht.

Die zusätzliche Erfassung des Pilotdrucks im Pilotraum kann folglich auch dazu beitragen, etwaige Leckagen Im Pilotraum oder im Umfeld des Pilotraums zu erfassen.

Gemäß einer weiteren beispielhaften Ausgestaltung ist der Drucksensor im Pilotraum angeordnet. Gemäß einer weiteren beispielhaften Ausgestaltung koppelt der Drucksensor direkt an den Pilotraum an. Eine Anordnung im oder möglichst nahe bei dem Pilotraum erlaubt eine hochgenaue Erfassung des dort herrschenden Drucks. Etwaige Kompressibilitäten oder Strömungsverhältnisse in den Leitungen haben keinen oder nur einen geringen Einfluss auf den gemessenen Pilotdruck.

Gemäß einer weiteren beispielhaften Ausgestaltung ist der Drucksensor außerhalb des Pilotraums angeordnet, wobei der Drucksensor über eine Fluidleitung mit dem Pilotraum gekoppelt ist, insbesondere über eine gemeinsame Leitung mit dem zumindest einen Pilotventil. Der Drucksensor kann auch vom Pilotraum beabstandet werden, sofern eine fluidische Verbindung mit dem Pilotraum besteht, über die der dortige Pilotdruck vom Drucksensor erfasst werden kann. Der Drucksensor kann dann räumlich vom Pilotraum beabstandet sein, wodurch sich bauliche Eingriffe beim Regelventil vermeiden lassen.

Gemäß einer weiteren beispielhaften Ausgestaltung ist die Steuereinrichtung in einem Pilotsteuergehäuse angeordnet, das in einer Verlängerung der Längsachse der Stange außerhalb eines Ventilgehäuses angeordnet ist. Damit kann die Steuereinrichtung an der vom Schließelement abgewandten Seite des Ventilgehäuses an das Ventilgehäuse angeflanscht werden. In einer beispielhaften Ausgestaltung kann der Wegsensor dort ein Wegsignal erfassen, wenn die Stange des Regelventils in Nachbarschaft zum Pilotsteuergehäuse bewegt wird. In einer beispielhaften Ausgestaltung ist der Drucksensor im Pilotsteuergehäuse angeordnet und über eine Fluidleitung fluidisch mit dem Pilotraum verbunden, um den Pilotdruck im Pilotraum zu erfassen.

Gemäß einem weiteren Aspekt bezieht sich die vorliegende Offenbarung auf eine als Vorsteuereinrichtung oder Pilotsteuereinrichtung gestaltete Steuereinrichtung, die ein insbesondere als Sitzventil gestaltetes Regelventil ertüchtigen kann, um eine offenbarungsgemäße Vorrichtung zu bilden. Eine solche Steuereinrichtung eignet sich für die Nachrüstung oder Ertüchtigung existierender Regelventile. Die Steuereinrichtung kann den Drucksensor zur Erfassung des Drucks im Pilotraum des Regelventils umfassen, wobei der Drucksensor dann über eine geeignete Leitung fluidisch mit dem Pilotraum koppelbar ist. Grundsätzlich kann die Steuereinrichtung auch den Wegsensor umfassen, der Bewegung der Stange des Regelventils erfasst. In einer beispielhaften Ausgestaltung ist für die Steuereinrichtung ein Pilotsteuergehäuse vorgesehen, das das zumindest eine Pilotventil, die Pilotsteuereinheit und gegebenenfalls zumindest den Drucksensor und/oder den Wegsensor aufweist. Mit einem solchen Pilotsteuergehäuse kann die Steuereinrichtung auf ein Ventilgehäuse eines Regelventils aufgesetzt und mit dem Pilotraum fluidisch verbunden werden.

Gemäß einem weiteren Aspekt bezieht sich die vorliegende Offenbarung auf ein Verfahren zur Durchflussregelung eines Fluids mit den Folgenden Schritten:
- Bereitstellung einer Vorrichtung gemäß zumindest einer der hierin beschriebenen Ausgestaltungen,
- Bereitstellung des Wegsignals über den Wegsensor,
- Bereitstellung des Drucksignals über den Drucksensor, und
- Steuerung des zumindest einen Pilotventils mit der Pilotsteuereinheit,
wobei die Pilotsteuereinheit zumindest zeitweise das Wegsignal und das Drucksignal parallel auswertet, um das zumindest eine Pilotventil anzusteuern.

Gemäß einer weiteren Ausgestaltung des Verfahrens wertet die Pilotsteuereinheit zumindest bei einem Betriebszustand des Regelventils nahe dem Losbrechdruck sowohl das Wegsignal als auch das Drucksignal aus, wobei die Pilotsteuereinheit diese Auswertung (gemeinsam) der Steuerung des zumindest einen Pilotventils zugrunde legt.

Gemäß einer weiteren Ausgestaltung umfasst das Verfahren ferner den Schritt der Erfassung von Änderungen des Betriebsverhaltens des Regelventils auf Basis des Wegsignals und des Drucksignals, insbesondere umfassend eine Erfassung einer sich verändernden Korrelation zwischen dem Wegsignal und dem Drucksignal. Gemäß einer weiteren Ausgestaltung umfasst das Verfahren ferner den Schritt einer Anpassung einer Kennlinie für das Verhalten des Regelventils, wenn erfasste Änderungen des Betriebsverhaltens in tolerierbaren Grenzen stattfinden. Gemäß einer weiteren Ausgestaltung umfasst das Verfahren ferner den Schritt der Ausgabe eines Signals zur Anforderung einer Wartung und/oder Reparatur im Falle der Erfassung signifikanter Änderungen des Betriebsverhaltens. Gemäß einer weiteren Ausgestaltung umfasst das Verfahren ferner den Schritt der Ausgabe eines Stopp-Signals im Falle der Erfassung nicht tolerierbar Änderungen des Betriebsverhaltens.

Es versteht sich, dass das offenbarungsgemäße Verfahren analog zur offenbarungsgemäßen Vorrichtung ausgestaltet sein kann, und umgekehrt. Insbesondere eignet sich das offenbarungsgemäße Verfahren zum Betrieb einer offenbarungsgemäßen Vorrichtung. Das offenbarungsgemäße Verfahren kann auch dann genutzt werden, wenn ein bestehendes Regelventil um eine offenbarungsgemäße Steuereinrichtung ergänzt wird, um eine Vorsteuerung des Regelventils zu ermöglichen.

Grundsätzlich können Merkmale abhängiger Vorrichtungsansprüche auch zur Weiterbildung und Ergänzung etwaiger unabhängiger Verfahrensansprüche genutzt werden.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der vorliegenden Offenbarung ergeben sich aus der nachfolgenden Beschreibung mehrerer bevorzugter Ausführungsbeispiele unter Bezugnahme auf die Zeichnungen. Es zeigen:
- Fig. 1:: eine schematisch stark vereinfachte Ansicht einer Ausgestaltung einer Vorrichtung zur Durchflussregelung eines Fluids;
- Fig. 2:: eine weitere schematische Ansicht einer Vorrichtung auf Basis von Fig. 1, wobei Fig. 2 teilweise einen höheren Detaillierungsgrad aufweist.;
- Fig. 3:: eine weitere Ansicht einer Ausgestaltung einer Vorrichtung zur Durchflussregelung eines Fluids, mit einem als NC-Ventil gestalteten Regelventil;
- Fig. 4:: eine weitere Ansicht einer Ausgestaltung einer Vorrichtung zur Durchflussregelung eines Fluids, mit einem als NO-Ventil gestalteten Regelventil;
- Fig. 5:: ein schematisches Blockdiagramm zur Veranschaulichung einer Ausführungsform eines Verfahrens zum Betreiben einer Vorrichtung zur Durchflussregelung eines Fluids; und
- Fig. 6:: ein weiteres schematisches Blockdiagramm zur Veranschaulichung von Teilaspekten einer Ausgestaltung eines Verfahrens zum Betreiben einer Vorrichtung zur Durchflussregelung eines Fluids.

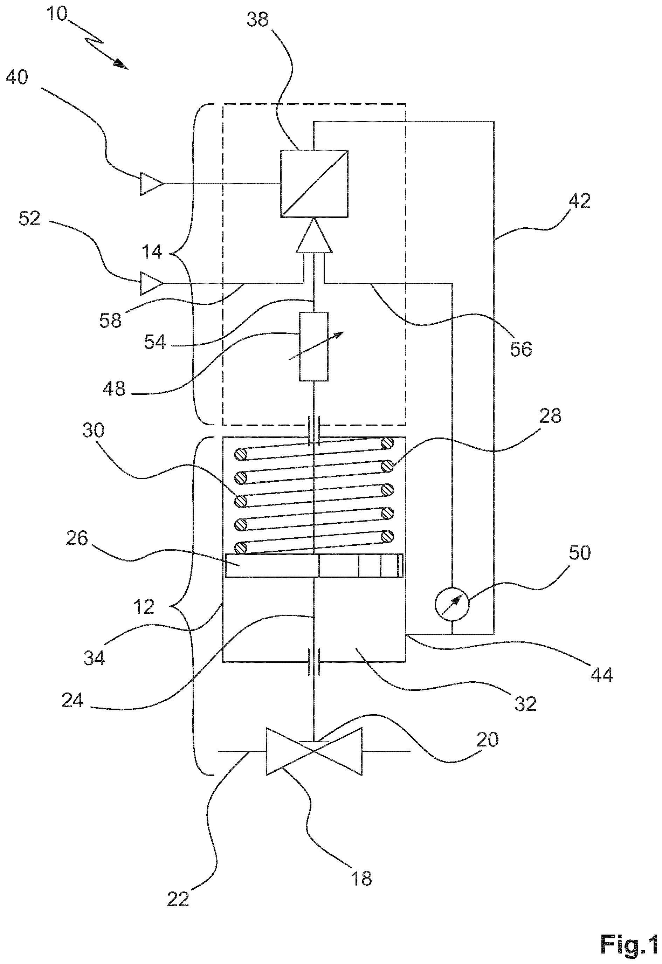

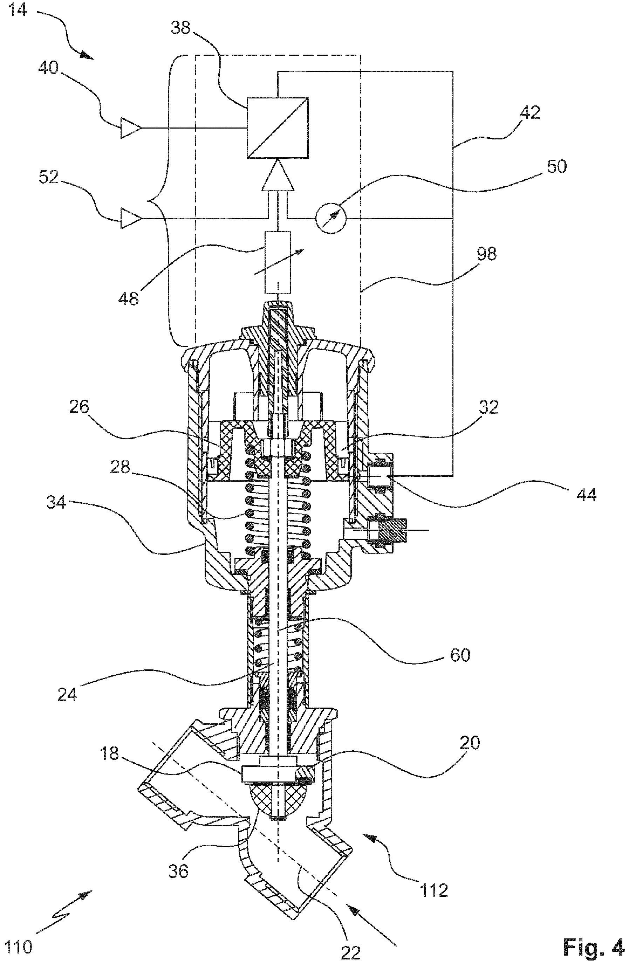

Fig. 1 veranschaulicht anhand einer schematischen Ansicht eine insgesamt mit 10 bezeichnete Vorrichtung zur Durchflussregelung eines Fluids. Die Figuren 1-3 beziehen sich jeweils auf eine Vorrichtung 10 mit einem Regelventil 12, das beispielhaft als NC-Ventil (normally closed) gestaltet ist. Fig. 4 bezieht sich beispielhaft auf eine Vorrichtung 110 mit einem Regelventil 112, das als NO-Ventil (normally open) gestaltet ist.

In Fig. 1 ist schematisch ein Regelventil 12 dargestellt, das über eine Steuereinrichtung 14 angesteuert (vorgesteuert) wird. Die Steuereinrichtung 14 kann auch als Pilotsteuereinrichtung oder Vorsteuereinrichtung bezeichnet werden. Das Regelventil 12 ist im Ausführungsbeispiel als Sitzventil 18 gestaltet. Mit einem Schließelement 20 kann das Regelventil 12 eine Fluidleitung 22 bedarfsweise öffnen und schließen. Sofern das Regelventil 12 als Stetigventil gestaltet ist, kann ein Öffnungsgrad (beispielsweise zwischen 0 % und 100 %) eingestellt werden.

Das Schließelement 20 ist im Normalzustand des Regelventils 12 geschlossen. Das Schließelement 20 ist an einer Stange 24 gehalten, die mit einem Teller 26 gekoppelt ist. Die Stange 24 kann grundsätzlich auch als Stößel bezeichnet werden. Der Teller 26 kann auch als Ventilkolben bezeichnet werden. Auf den Teller 26 wirkt ein Vorspannelement 28 ein, das beispielsweise als Feder 30, insbesondere als Druckfeder, gestaltet ist.

Der als Ventilkolben gestaltete Teller 26 ist verschiebbar gelagert und begrenzt einen Pilotraum 32. Der Pilotraum 32 wird im Ausführungsbeispiel durch ein Ventilgehäuse 34 und den Teller 26 begrenzt. In Abhängigkeit von einer aktuellen Ist-Position des Tellers 26 im Ventilgehäuse 34 kann der Pilotraum 32 größer oder kleiner werden. Im Ausführungsbeispiel stützt sich das Vorspannelement 28 an einem Ventilgehäuse 34 ab und drängt den Teller 26 und damit über die Stange 24 auch das Schließelement 20 in Richtung auf einen geschlossenen Zustand des Regelventils 12.

In dem Bereich, in dem der Teller 26 angeordnet ist, ist das Ventilgehäuse 34 als Zylinder gestaltet. Der Teller 26 und das Ventilgehäuse 34 bilden eine Kolben-Zylinder-Paarung. Der Pilotraum 32 kann bedarfsweise über die Steuereinrichtung 14 mit einem unter Druck stehenden Pilotfluid gefüllt werden, wodurch eine gegen eine durch das Vorspannelement 28 aufgebrachte Vorspannkraft gerichtete Gegenkraft erzeugt wird, um im Falle der Überwindung der Vorspannkraft den Teller 26 zu bewegen. Auf diese Weise kann das Sitzventil 18 geöffnet und/oder ein Öffnungsgrad erhöht werden. Das Vorstehende gilt insbesondere für NC-Ventil. Bei einem NO-Ventil (vergleiche Fig. 4) lässt sich auf diese Weise das Ventil schließen oder der Öffnungsgrad reduzieren.

Das Regelventil 12 ist über die Steuereinrichtung 14 steuerbar. Zu diesem Zweck ist eine Pilotsteuereinheit 38 vorgesehen, die bedarfsweise den Pilotraum 32 mit dem Pilotfluid beaufschlagt. Als Pilotfluid eignen sich beispielsweise Druckluft, Wasser und vergleichbare Hydraulikfluide. Üblicherweise unterscheiden sich das durch für die Fluidleitung 22 strömende Fluid und das durch die Steuereinrichtung 14 bereitgestellte Pilotfluid.

Die Pilotsteuereinheit 38 wird im Ausführungsbeispiel gemäß Fig. 1 über einen Anschluss 40 mit einem unter einem (üblicherweise relativ konstanten) Pilotdruck stehenden Pilotfluid versorgt, beispielsweise mit Druckluft. Das Pilotfluid wird durch die Pilotsteuereinheit 38 über eine Pilotleitung 42 und den Anschluss 44 in den Pilotraum 32 eingeleitet oder aus dem Pilotraum 32 abgeleitet.

Das Regelventil 12 soll möglichst nicht nur zwei Zustände (auf und zu) aufweisen können, sondern eine stetige Veränderung des Öffnungsgrades erlauben. Daher ist es von Bedeutung, eine Rückmeldung über den aktuellen Zustand (Öffnungsgrad) des Regelventils 12 zu erhalten. Zu diesem Zweck ist ein Wegsensor 48 vorgesehen, der im Ausführungsbeispiel mit der Stange 24 des Regelventils 12 gekoppelt ist. Beispielhaft ist der Wegsensor 48 als lineares Potentiometer gestaltet, so dass Bewegungen der Stange 24 direkt (beispielsweise über ein Spannungssignal) in ein Wegsignal überführt werden können. Andere Arten von Wegsensoren sind vorstellbar.

Der Wegsensor 48 stellt ein Wegsignal (Leitung 54) bereit, das der Pilotsteuereinheit 38 zugeführt wird. Ferner werden der Pilotsteuereinheit 38 beim (symbolhaft dargestellten) Eingang 52 elektrische Signale über eine Leitung 58 zugeführt, etwa zur elektrischen Erregung zumindest eines Pilotventils. Es versteht sich, dass weitere Leitungen bzw. Anschlüsse vorgesehen sein können, beispielsweise Leitungen zur Spannungsversorgung oder einen oder mehrere Anschlüsse zur Ausgabe einer Rückmeldung betreffend den Zustand des Systems.

Außerdem können über den Eingang 52 weitere Signale bereitgestellt werden. Hierbei kann es sich beispielhaft um zwei oder mehr externe Signale handeln. Dies kann beispielsweise ein Signal umfassen, das den Sollwert (gewünschte Stellung des Regelventils) betrifft. Ferner kann ein sogenannter Istwert-Eingang vorgesehen sein, der Signale von Messwertgebern erhält, die den aktuellen Zustand des Regelventils beschreiben. Der Eingang 52 steht also stellvertretend für verschiedene denkbare Eingänge.

Zur Verbesserung des Regelverhaltens ist zusätzlich ein Drucksensor 50 vorgesehen, der über eine Leitung 56 ein Drucksignal bereitstellt. Der Drucksensor 50 ist fluidisch mit dem Pilotraum 32 gekoppelt, um den dortigen Pilotdruck zu erfassen. Auf diese Weise werden der Pilotsteuereinheit zum einen über den Wegsensor 48 ein Wegsignal 54 und zum anderen über den Drucksensor 50 ein Drucksignal 56 zugeführt. Beide Signale kennzeichnen den Betriebszustand des Regelventils 12.

Beispielsweise dann, wenn der Pilotdruck im Pilotraum 32 bereits angestiegen ist, aber der Teller 26 noch nicht bewegt wurde, weil die auf den Pilotdruck zurückgehende Gegenkraft die durch das Vorspannelement 28 aufgebrachte Vorspannkraft noch nicht überwindet, ist das Wegsignal 54 nur bedingt aussagekräftig. Jedoch kann der Druckanstieg bereits über den Drucksensor 50 ermittelt und der Pilotsteuereinheit 38 mitgeteilt werden. Auf diese Weise kann etwa unmittelbar vor dem Erreichen einer Losbrechkraft für den Teller 26 eine hinreichend kleine Menge des Pilotfluids in dem Pilotraum 32 eingeleitet werden, um ein Überschießen/Überschwingen zu vermeiden und trotzdem den Teller 26 zu bewegen.

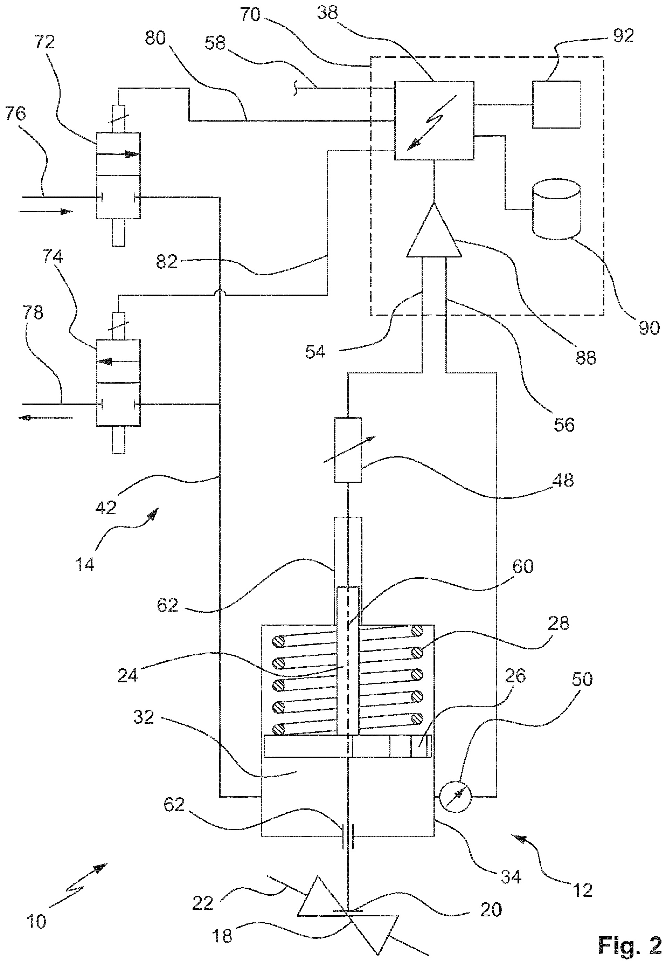

Ergänzend zu Fig. 1 veranschaulicht Fig. 2 weitere Aspekte der Gestaltung der Vorrichtung 10. Das Regelventil 12 ist in Fig. 2 als schräg orientiertes Sitzventil 18 (Schrägsitzventil) gestaltet, vergleiche die symbolhafte Darstellung der Orientierung zwischen dem Sitzventil 18 und dem Schließelement 20. Auf diese Weise kann ein durch die Fluidleitung 22 strömendes Fluid das Regelventil 12 strömungsgünstig passieren.

Analog zur Darstellung gemäß Fig. 1 weist das Regelventil 12 eine Stange 24 auf, die das Schließelement 20 mit einem Teller 26 verbindet und sich gegebenenfalls über den Teller 26 hinaus erstreckt. Die Stange 24 weist entlang ihrer Längserstreckung eine Längsachse 60 auf. Die Stange 24 ist beispielhaft an einer Führung 62 im Ventilgehäuse 34 verschieblich gelagert. Der Teller 26 bildet gemeinsam mit dem Ventilgehäuse 34 einen Pilotraum 32 aus. Das Vorspannelement 28 stützt sich am Gehäuse 34 ab und drängt den Teller 26 und damit das Schließelement 20 in Richtung auf eine Schließstellung.

Der Drucksensor 50 koppelt fluidisch an den Pilotraum 32 an, um ein Drucksignal zu erfassen und der Pilotsteuereinheit 38 bereitzustellen. Gleichermaßen ist wie zuvor schon beschrieben der Wegsensor 48 mit der Stange 24 gekoppelt, um über die Leitung 54 ein Wegsignal bereitzustellen, das eine Ist-Position des Tellers 26 und damit des Schließelements 20 beschreibt. Eine Leitung 58 dient zur Versorgung der Pilotsteuereinheit 38 mit elektrischen Signalen.

Die Steuereinrichtung 14 weist einen mit 70 bezeichneten Steuerblock auf, der beispielhaft die Pilotsteuereinheit 38 umfasst. Im Ausführungsbeispiel umfasst die Steuereinrichtung 14 ferner ein erstes Pilotventil 72 und ein zweites Pilotventil 74. Die Pilotventile 72, 74 sind jeweils beispielhaft als getaktete 2/2-Wegeventile gestaltet. Das Pilotventil 72 ist fluidisch mit einer Leitung 76 gekoppelt, die auch als Pumpenleitung (P-Leitung) bezeichnet sein kann. Über die Leitung 76 (vergleiche hierzu auch den insoweit funktionsgleichen Anschluss 40 in Fig. 1) wird das unter Druck stehende Pilotfluid zugeführt. Das Pilotventil 74 ist fluidisch mit einer Leitung 78 gekoppelt, die auch als Tankleitung (T-Leitung) bezeichnet sein kann. Im Ausführungsbeispiel gemäß Fig. 2 dient das erste Pilotventil 72 zur Druckerhöhung im Pilotraum 32. Das zweite Pilotventil 74 dient zur Druckreduzierung im Pilotraum 32.

Die Pilotventile 72, 74 können auf Basis eines PWM-Signals durch die Pilotsteuereinheit 38 angesteuert werden. Zu diesem Zweck ist die Pilotsteuereinheit 38 über eine Steuerleitung 80 mit dem Pilotventil 72 und eine Steuerleitung 82 mit dem Pilotventil 74 gekoppelt. Die Pilotventile 72,74 sind im Ausführungsbeispiel elektrisch erregt. Die Pilotventile 72, 74 werden bedarfsweise mit einer bestimmten Frequenz angesteuert, wobei der Tastgrad (Einschaltdauer 0 % bis 100 %) durch die Pilotsteuereinheit 38 definiert wird.

Im Falle eines vorgegebenen Sollwerts (zum Beispiel Durchfluss durch das Regelventil 12 oder Öffnungsgrad desselben) ermittelt die Pilotsteuereinheit 38 auf Basis der vom Wegsensor 48 und vom Drucksensor 50 bereitgestellten Signale einen Istwert, im Falle einer Abweichung zwischen Sollwert und Istwert wird der Druck im Pilotraum 32 gezielt erhöht oder reduziert, um den Teller 26 und damit das Schließelement 20 zu bewegen. Die Regelung erfolgt nicht nur auf Basis des Wegsignals, sondern auch auf Basis eines Signals für den Pilotdruck im Pilotraum 32.

Wenn der Druck im Pilotraum 32 erhöht werden soll, wird das erste Pilotventil 72 angesteuert, um das unter Druck stehende Pilotfluid in den Pilotraum 32 einzuleiten. Währenddessen bleibt das zweite Pilotventil 74 geschlossen. Wenn der Druck im Pilotraum 32 reduziert werden soll, wird das zweite Pilotventil 74 angesteuert, um das unter Druck stehende Pilotfluid aus dem Pilotraum 32 abzuleiten. Währenddessen bleibt das erste Pilotventil 72 geschlossen. Es versteht sich, dass auch andere Gestaltungen vorstellbar sind. Beispielsweise können die beiden Pilotventile 72, 74 zu einem erweiterten Wegeventil kombiniert werden.

Die zusätzliche Erfassung des Drucksignals mit dem Drucksensor 50 erlaubt beispielsweise in der Nähe der Losbrechkraft für die Bewegung des Tellers 26 geringe Regeleingriffe, also beispielsweise geringe Volumenströme für das einströmende und/oder ausströmende Pilotfluid. Auf diese Weise kann eine gewünschte Stellgröße (beispielsweise Position des Schließelements 20 und/oder des Tellers 26) genau angefahren werden, die Gefahr für ein Übersteuern/Überschießen ist reduziert. Der Sollwert kann schneller erreicht werden. Dies ist idealerweise mit weniger Schaltzyklen möglich. Ferner erlaubt die PWM-basierte Steuerung des zumindest einen Pilotventils 72, 74 eine fein abgestufte Anpassung erforderlicher Fluidmengen für das Pilotventil.

In der schematischen Darstellung gemäß Fig. 2 beherbergt der Steuerblock 70 neben der Pilotsteuereinheit 38 einen mit dieser gekoppelten Komparator 88, der das Wegsignal (Leitung 54) und das Drucksignal (Leitung 56) miteinander vergleicht. Auch das Wegsignal steht grundsätzlich für ein Druckniveau im Pilotraum 32, weil zumindest nach dem Überwinden der Losbrechkraft eine Korrelation zwischen der Stellung des Tellers 26 und dem Druck im Pilotraum 32 gegeben ist. Die Korrelation zwischen Druck und Position korrespondiert beispielsweise mit einer Federkennlinie für das zumindest eine Vorspannelement 28.

Sofern eine bestimmte Korrelation angenommen wird, kann etwa im Zeitablauf mithilfe des Komparators 88 geprüft werden, ob die Korrelation während des Betriebs der Vorrichtung 10 stabil ist, oder ob sich Änderungen ergeben. Eine signifikante Veränderung bei der Korrelation kann auf einen erhöhten Verschleiß und/oder einen Wartungsbedarf hindeuten. Es versteht sich, dass der Komparator 88 auch funktional in die Pilotsteuereinheit 38 integriert sein kann.

Ferner umfasst der Steuerblock 70 im Ausführungsbeispiel einen Speicher 90, auf den die Pilotsteuereinheit 38 zugreifen kann. Im Speicher 90 können beispielhaft Kennlinien für das Betriebsverhalten des Regelventils 12 hinterlegt sein, die auch eine Korrelation zwischen dem Wegsignal (Wegsensor 48) und dem Drucksignal (Drucksensor 50) beschreiben. In einer beispielhaften Ausgestaltung kann die Pilotsteuereinheit 38 im Speicher 90 hinterlegte Kennlinien anpassen, beispielsweise um eine aktiv erfasste Korrelation zu berücksichtigen. Dies ist etwa dann vorstellbar, wenn sich die Korrelation (beispielsweise ein Korrelationskoeffizient) ändert, aber insgesamt noch ein akzeptables Betriebsverhalten vorliegt. Ferner kann eine Anpassung hinterlegter Kennlinien im Speicher 90 auch dann vorgenommen werden, wenn die Vorrichtung 10 gewartet und/oder inspiziert wird und dabei im Rahmen der Montage und/oder Einrichtung das konkrete Betriebsverhalten (Fertigungsstreuung, etc.) des verbauten Regelventils 12 und/oder der Steuereinrichtung 14 ermittelt wird.

Ferner ist die Pilotsteuereinheit 38 im Ausführungsbeispiel im Steuerblock 70 mit einer Kommunikationseinheit 92 gekoppelt. Die Kommunikationseinheit 92 dient zum Austausch von Informationen und Signalen. Über die Kommunikationseinheit 92 kann die Pilotsteuereinheit 38 der Steuereinrichtung 14 mit Sollwerten versorgt werden. Im Falle ungewöhnlicher Betriebszustände kann über die Kommunikationseinheit 92 eine Rückmeldung erfolgen, etwa zur Anforderung einer Wartung oder Reparatur. Gleichermaßen können während des Betriebs das mit dem Wegsensor 48 ermittelte Wegsignal und/oder das mit dem Drucksensor 50 ermittelte Drucksignal für den Pilotdruck ausgegeben werden.

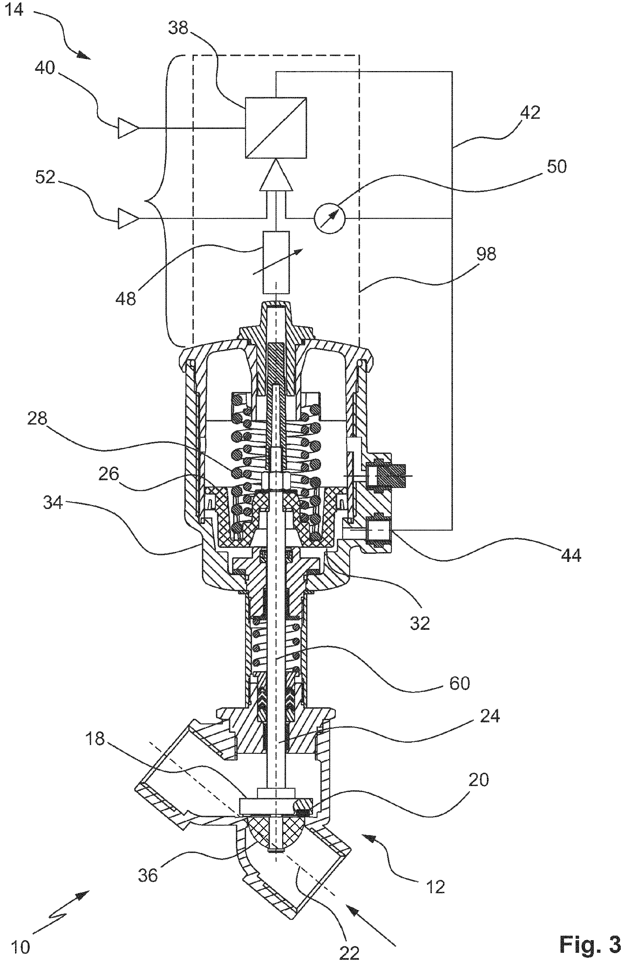

Die Figuren 3 und 4 veranschaulichen denkbare strukturelle Ausgestaltungen von Regelventilen 12, 112 für offenbarungsgemäße Vorrichtungen 10, 110. Die Vorrichtung 10 gemäß Fig. 3 knüpft an die anhand der Figuren 1 und 2 schematisch veranschaulichten Gestaltungen eines NC-Ventils (normalerweise geschlossen) an. Fig. 4 zeigt bei der Vorrichtung 110 mit dem Regelventil 112 ein NO-Ventil (normalerweise geöffnet). Die schematische Gestaltung der jeweiligen Steuereinrichtung 14 der Vorrichtungen 10, 110 entspricht in etwa den bereits in Zusammenhang mit den Figuren 1 und 2 veranschaulichten Gestaltungen, so dass auf Wiederholungen verzichtet wird. Für die jeweilige Steuereinrichtung 14 ist ein sogenanntes Pilotsteuergehäuse 98 vorgesehen (lediglich gestrichelt angedeutet in den Figuren 3 und 4), das an der vom Schließelement 20 abgewandten Seite der Stange 24 am Ventilgehäuse 34 montiert ist.

Die Regelventile 12, 112 gemäß den Figuren 3 und 4 sind jeweils als Schrägsitzventile 18 gestaltet, die von einem Fluid entlang der jeweiligen Fluidleitung 22 durchströmt werden, sofern die Schrägsitzventile 18 geöffnet sind. Die Schrägsitzventile 18 weisen jeweils ein Schließelement 20 und einen diesem benachbarten Regelkonus 36 auf. Der Regelkonus 36 beeinflusst eine Kennlinie der Regelventile 12, 112 und sorgt für eine günstige Korrelation zwischen Öffnungsgrad (Stellung des Schließelements 20) und Durchfluss. Der Regelkonus 36 unterstützt die Eignung zur Verwendung als Stetigventil, so dass auch Zwischenzustände zwischen einem vollständig geöffneten Zustand (vergleiche das Regelventil 112 in Fig. 4) und einem vollständig geschlossenen Zustand (vergleiche das Regelventil 12 in Fig. 3) präzise angefahren werden können.

An das Schließelement 20 schließt sich jeweils eine Stange 24 mit einer Längsachse 60 an, wobei sich die Stange 24 durch einen Teller 26 und folglich auch durch einen Pilotraum 32 erstreckt. Die Stange 24 ist jeweils über eine Führung verschieblich im Ventilgehäuse 34 gelagert.

Bei der Gestaltung als NC-Ventil gemäß Fig. 3 drängt ein beispielsweise als Feder gestaltetes Vorspannelement 28 den Teller 26 und damit die Stange 24 und das Schließelement 20 in Richtung auf die geschlossene Stellung. Damit das Regelventil 12 geöffnet werden kann, kann der Pilotraum 32 mit dem unter Druck stehenden Pilotfluid geflutet werden, dies erfolgt über den Anschluss 44 (Leitung 42). Auf diese Weise die Kraft des Vorspannelements 28 überwunden, der Teller 26 kann sich im dort zylindrisch gestalteten Ventilgehäuse 34 bewegen, so dass der Pilotraum 32 vergrößert wird. Umgekehrt kann durch Ablassen des Pilotfluids ein Druckabbau im Pilotraum 32 erfolgen, so dass das Regelventil 12 geschlossen werden kann. Sowohl über den Drucksensor 50 als auch über den Wegsensor 48 kann der aktuelle Betriebszustand des Regelventils 12 überwacht werden.

Bei dem als NO-Ventil gestalteten Regelventil 112 gemäß Fig. 4 drängt das Vorspannelement 28 den Teller 26 und damit die Stange 24 und das Schließelement 20 weg von der geschlossenen Stellung. Der Pilotraum 32 ist im Ausführungsbeispiel an der vom Schließelement 20 abgewandten Seite des Tellers 26 ausgebildet. Über den Anschluss 44 kann das unter Druck stehende Pilotfluid in den Pilotraum 32 eingeleitet werden (Leitung 42). Übersteigt der Druck im Pilotraum 32 die durch das Vorspannelement 28 aufgebrachte Vorspannkraft, kann das Schließelement 20 und damit das gesamte Regelventil 112 geschlossen werden. Zwischenposition zwischen der vollständig geöffneten und der vollständig geschlossenen Stellung können durch geeignete Anpassung des Drucks im Pilotraum 32 angefahren werden. Der Wegsensor 48 und der Drucksensor 50 stellen Signale bereit, die den Betriebszustand des Regelventils 112 genau charakterisieren.

Der Wegsensor 48 ermittelt eine aktuelle Position der Stange 24 und damit des Schließelements 20. Der Drucksensor 50 ermittelte einen aktuellen Druck im Pilotraum 32. Zu diesem Zweck kann der Drucksensor 50 zum einen möglichst nahe bei dem Pilotraum 32 oder sogar im Pilotraum 32 angeordnet sein, vergleiche auch Fig. 2. Es ist jedoch auch möglich, den Drucksensor 50 vom Pilotraum 32 deutlich zu beabstanden, vergleiche die Figuren 1, 3 und 4. Sofern eine fluidische Verbindung mit dem Pilotraum 32 besteht, kann der Drucksensor 50 mit hinreichender Genauigkeit den Druck im Pilotraum 32 ermitteln. Grundsätzlich kann der Drucksensor 50 fluidisch mit der Pilotleitung 42 gekoppelt sein, über die das Pilotfluid durch die Pilotsteuereinheit 38 in dem Pilotraum 32 eingeleitet oder aus diesem abgeleitet wird. Auf diese Weise kann der Drucksensor 50 mit geringem baulichen Zusatzaufwand integriert werden.

In Zusammenhang mit den Figuren 3 und 4 wird erneut auf Fig. 2 verwiesen. In Fig. 2 sind die beiden Pilotventile 72, 74 als stromlos geschlossene (NC, normally closed) Pilotventile gestaltet. Es ist jedoch auch vorstellbar, das Pilotventil 72 als stromlos geschlossenes Ventil und das Pilotventil 74 als stromlos geöffnetes (NO, normally open) Ventil zu gestalten. Das Pilotventil 74 wäre dann entgegen der Darstellung in Fig. 2 bezüglich der Horizontalen gespiegelt. Diese Variante bietet sich etwa dann an, wenn das Regelventil 12, 112 eine Federrückstellung aufweist, vergleiche das jeweilige Vorspannelement 28 in den Figuren 3 und 4. Dann kann nämlich bei einem möglichen Stromausfall das Vorspannelement 28 das Regelventil 12 schließen bzw. das Regelventil 112 öffnen, weil gleichzeitig das als NO-Ventil gestaltete Pilotventil 74 im geöffneten Zustand wäre. Das Pilotfluid kann entweichen, so dass ein definierter Zustand gegeben ist. Hingegen ergäbe sich bei der in Fig. 2 gezeigt Variante mit zwei als NC-Ventil gestalteten Pilotventil 72, 74 dann gegebenenfalls ein undefinierter Zustand, wenn das Pilotventil 74 in stromlosen Zustand in der geschlossenen Stellung wäre. Dies ist nicht einschränkend zu verstehen.

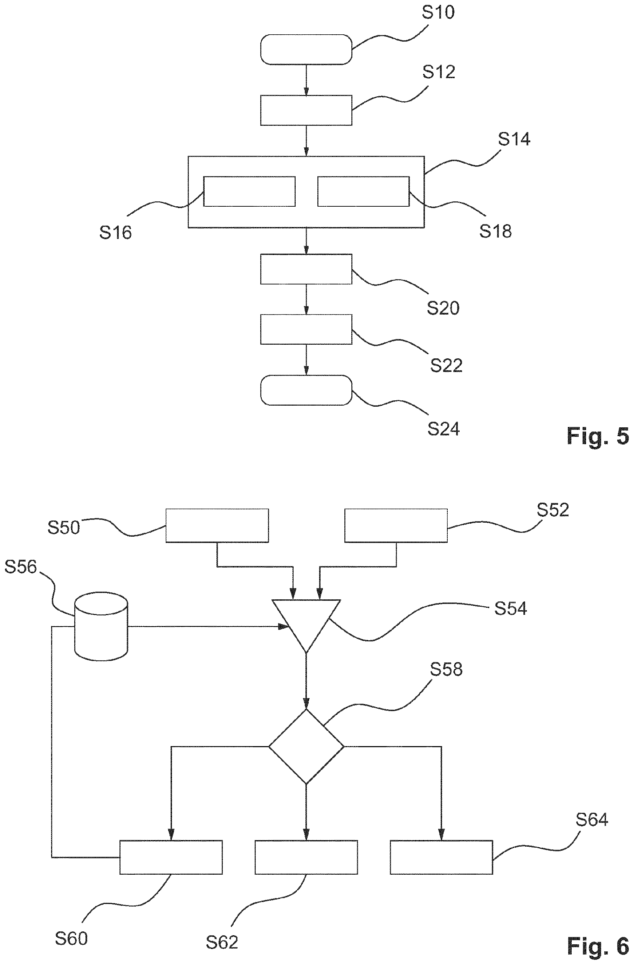

Fig. 5 veranschaulicht anhand eines schematischen Blockdiagramms eine beispielhafte Ausgestaltung eines Verfahrens zum Betreiben einer Vorrichtung zur Durchflussregelung eines Fluids, insbesondere einer offenbarungsgemäßen Vorrichtung mit einem Regelventil und einer Steuereinrichtung zu dessen Vorsteuerung. Das Verfahren startet bei einem Schritt S10 und endet bei einem Schritt S24. Dies ist jedoch nicht einschränkend zu verstehen.

Ein Schritt S12 umfasst die Bereitstellung einer Vorrichtung zur Durchflussregelung gemäß zumindest einer der hierin veranschaulichten Ausgestaltungen. Dies kann auch die Ertüchtigung eines schon existierenden Regelventils umfassen, indem eine Steuereinrichtung bereitgestellt wird, die zur Vorsteuerung des Regelventils dient.

Ein weiterer Schritt S14 betrifft die Signalerfassung zur Überwachung und Steuerung des Regelventils. Dies umfasst in einem Schritt S16 die Erfassung und Bereitstellung eines Wegsignals. Das Wegsignal wird mit einem Wegsensor erfasst. Ferner ist ein Schritt S18 vorgesehen, der die Erfassung und Bereitstellung eines Drucksignals mit einem Drucksensor umfasst.

Das Drucksignal und das Wegsignal können zumindest zeitweise parallel erfasst und ausgewertet werden, dies erfolgt in einem Schritt S20. In einem sich anschließenden Schritt S22 kann das Regelventil auf Basis des Wegsignals und des Drucksignals unter Nutzung zumindest eines Pilotventils gesteuert werden. Dies ist insbesondere im Umfeld einer Losbrechkraft für das Schließelement des Regelventils von Vorteil, weil dort das Wegsignal allein womöglich nur bedingt aussagekräftig ist.

Fig. 6 veranschaulicht anhand eines schematischen Blockdiagramms weitere Verfahrensaspekte, die beim Betreiben einer offenbarungsgemäßen Vorrichtung mit einem Regelventil zur Regelung eines Fluidstroms angewandt werden können. Ein Schritt S50 bezieht sich auf die Erfassung und Bereitstellung eines Wegsignals zur Erfassung einer Position des Regelventils.

Ein Schritt S52 bezieht sich auf die Erfassung und Bereitstellung eines Drucksignals zur Erfassung eines Drucks im Pilotraum. In einem weiteren Schritt S54 erfolgt ein Vergleich des Drucksignals und des Wegsignals. Auf diese Weise kann eine Korrelation zwischen dem Wegsignal und dem Drucksignal ermittelt bzw. auf etwaige Veränderungen überwacht werden. Dies kann auch einen Vergleich über die Lebensdauer des Regelventils umfassen, um Abweichungen bzw. eine sich verändernde Korrelation (zeitlicher Drift) zwischen dem Drucksignal und dem Wegsignal zu erfassen. Der Vergleich im Schritt S54 kann unter Berücksichtigung hinterlegter Daten (S56) erfolgen, beispielsweise unter Berücksichtigung hinterlegter Kennlinien, Kennwerte für die Losbrechkraft, einer zu erwartenden Korrelation zwischen dem Wegsignal und dem Drucksignal, bekannter Betriebsparameter und ähnlichem.

Auf Basis des Vergleichs im Schritt S54 wird im Schritt S58 festgelegt, ob eine signifikante Abweichung gegeben ist, und wie im Falle einer Abweichung damit umzugehen ist. Beispielsweise bezieht sich ein Schritt S60 auf Fälle, bei denen eine sich verändernde Korrelation festgestellt wurde, aber insgesamt noch akzeptable Betriebsbedingungen vorliegen. Die Vorrichtung mit dem Regelventil kann weiter betrieben werden. Gegebenenfalls kann eine Anpassung der hinterlegten Kennlinien (vergleiche den Schritt S56) erfolgen, um auf dieser Basis die Überwachung fortzuführen. Ein Schritt S62 bezieht sich auf solche Fälle, bei denen große Abweichung festgestellt werden. Es kann sich eine entsprechende Ausgabe von Signalen zur Anforderung einer Wartung oder Reparatur anschließen. Im Falle inakzeptabler Betriebsbedingungen kann auch ein entsprechendes Warnsignal oder Stoppsignal ausgegeben werden.

Sofern eine stabile Korrelation zwischen dem Wegsignal und dem Drucksignal gegeben ist, Schritt S64, sind keine besonderen Maßnahmen erforderlich, das Regelventil kann wie geplant angesteuert werden.

Die erweiterte Funktionalität wird durch die Bereitstellung des Drucksignals zusätzlich zum Wegsignal ermöglicht. Da nunmehr zwei Signale (Wegsignal und Drucksignal) vorliegen, die das Betriebsverhalten des Regelventils beschreiben, kann das Regelventil schneller und präziser gesteuert werden. Unerwartete Abweichungen zwischen dem Wegsignal (das indirekt auch für einen Druck im Pilotraum steht) und dem Drucksignal (möglichst direkte Messung des Drucks im Pilotraum) können auf Verschleiß oder Beschädigungen hindeuten.

Das mit Bezugnahme auf Fig. 6 veranschaulichte Verfahren kann zur Ergänzung des Verfahrens gemäß Fig. 5 genutzt werden. Das Verfahren gemäß Fig. 5 beschreibt allgemein den Betrieb einer offenbarungsgemäßen Vorrichtung mit vorgesteuertem Regelventil. Die weiteren Verfahrensaspekte gemäß Fig. 6 können zur übergeordneten Überwachung des Betriebsverhaltens und/oder im Rahmen einer sogenannten prädiktiven Instandhaltung genutzt werden.

## Patentansprüche

1. Vorrichtung (10, 110) zur Durchflussregelung eines Fluids, die Folgendes aufweist:
- ein insbesondere als Sitzventil (18) gestaltetes Regelventil (12, 112), das fluidisch steuerbar ist,
wobei das Regelventil (12, 112) ein Schließelement (20) und eine sich an das Schließelement (20) anschließende Stange (24) aufweist, die entlang ihrer Längserstreckung in einer Führung (62) verschieblich gelagert ist, und
wobei die Stange (24) mit einem Vorspannelement (28) gekoppelt ist, das über die Stange (24) auf das Schließelement (20) einwirkt,
- eine Steuereinrichtung (14) mit zumindest einem Pilotventil (72, 74) zur Steuerung des Regelventils (12, 112) und einer Pilotsteuereinheit (38) zur Steuerung des zumindest einen Pilotventils (72, 74),
wobei sich die Stange (24) zumindest abschnittsweise durch einen Pilotraum (32) erstreckt, der fluidisch mit dem zumindest einen Pilotventil (72, 74) koppelbar ist, um gegen eine vom Vorspannelement (28) aufgebrachte Vorspannkraft ein unter Druck stehendes Pilotfluid in den Pilotraum (32) einzuleiten oder um das Pilotfluid aus dem Pilotraum (32) abzuleiten,
- einen Wegsensor (48) zur Erfassung eines Ventilzustands des Regelventils (12, 112), insbesondere einer Ventilposition, und zur Bereitstellung eines Wegsignals (54), und
- einen Drucksensor (50) zur Erfassung eines aktuellen Drucks im Pilotraum (32) und zur Bereitstellung eines Drucksignals (56),
wobei die Pilotsteuereinheit (38) dazu ausgebildet ist, das Wegsignal (54) und das Drucksignal (56) auszuwerten, um das zumindest eine Pilotventil (72, 74) anzusteuern.

2. Vorrichtung (10, 110) nach Anspruch 1,
wobei die Pilotsteuereinheit (38) dazu ausgebildet ist, zumindest bei einem Betriebszustand des Regelventils (12, 112) nahe dem Losbrechdruck sowohl das Wegsignal (54) als auch das Drucksignal (56) auszuwerten und der Steuerung des zumindest einen Pilotventils (72, 74) zugrunde zu legen.

3. Vorrichtung (10, 110) nach Anspruch 1 oder 2,
wobei das Regelventil (12, 112) als Stetigventil gestaltet ist.

4. Vorrichtung (10, 110) nach einem der Ansprüche 1-3,
wobei das Regelventil (12, 112) beim Schließelement (20) einen Regelkonus (36) zur Einstellung des Öffnungsgrades aufweist.

5. Vorrichtung (10, 110) nach einem der Ansprüche 1-4,
wobei das Regelventil (12, 112) als Schrägsitzventil (18) gestaltet ist.

6. Vorrichtung (10, 110) nach einem der Ansprüche 1-5,
wobei das Vorspannelement (28) eine Feder (30), insbesondere eine Druckfeder, ist und sich zwischen einem Ventilgehäuse (34) und einem mit der Stange (24) gekoppelten Teller (26) erstreckt.

7. Vorrichtung (10, 110) nach einem der Ansprüche 1-6,
wobei das zumindest eine Pilotventil (72, 74) ein pulsweitengesteuertes Ventil ist.

8. Vorrichtung (10, 110) nach einem der Ansprüche 1-7,
wobei die Steuereinrichtung (14) ein erstes Pilotventil (72) zur Erhöhung des Drucks im Pilotraum (32) und ein zweites Pilotventil (74) zur Senkung des Drucks im Pilotraum (32) aufweist.

9. Vorrichtung (10, 110) nach einem der Ansprüche 1-8,
wobei die Steuereinrichtung (14) dazu ausgebildet ist, auf Basis des Wegsignals (54) einen Wert für einen Ist-Öffnungsgrad des Regelventils (12, 112) und hierauf aufbauend einen kennlinienbasierten Druckwert für den Pilotraum (32) zu ermitteln, und
wobei die Steuereinrichtung (14) dazu ausgebildet ist, auf Basis des Drucksignals (56) einen Ist-Druck im Pilotraum (32) zu ermitteln.

10. Vorrichtung (10, 110) nach einem der Ansprüche 1-9,
wobei die Steuereinrichtung (14) dazu ausgebildet ist, auf Basis des Wegsignals (54) und des Drucksignals (56) Änderungen des Betriebsverhaltens des Regelventils (12, 112) zu erfassen, insbesondere eine sich verändernde Korrelation zwischen dem Wegsignal (54) und dem Drucksignal (56).

11. Vorrichtung (10, 110) nach einem der Ansprüche 1-10,
wobei der Wegsensor (48) als lineares Potentiometer gestaltet ist.

12. Vorrichtung (10, 110) nach einem der Ansprüche 1-11,
wobei die Stange (24) des Regelventils (12, 112) gehäuseseitig über eine Schiebeführung (62) gelagert ist.

13. Vorrichtung (10, 110) nach einem der Ansprüche 1-12,
wobei der Drucksensor (50) im Pilotraum (32) angeordnet ist oder direkt an den Pilotraum (32) ankoppelt.

14. Vorrichtung (10, 110) nach einem der Ansprüche 1-13,
wobei der Drucksensor (50) außerhalb des Pilotraums (32) angeordnet und über eine Fluidleitung (42) mit dem Pilotraum (32) gekoppelt ist, insbesondere über eine gemeinsame Leitung mit dem zumindest einen Pilotventil (72, 74).

15. Verfahren zur Durchflussregelung eines Fluids mit den Folgenden Schritten:
- Bereitstellung einer Vorrichtung (10, 110) nach einem der Ansprüche 1-14,
- Bereitstellung des Wegsignals (54) über den Wegsensor (48),
- Bereitstellung des Drucksignals (56) über den Drucksensor (50), und
- Steuerung des zumindest einen Pilotventils (72, 74) mit der Pilotsteuereinheit (38), wobei die Pilotsteuereinheit (38) zumindest zeitweise das Wegsignal (54) und das Drucksignal (56) parallel auswertet, um das zumindest eine Pilotventil (72, 74) anzusteuern.
